Europäisches Patentamt

(19) European Patent Office

Office européen des brevets

(11) Publication number: 0 161 103
A2

# (12) EUROPEAN PATENT APPLICATION

(21) Application number: 85303149.0

(22) Date of filing: 02.05.85

(51) Int. Cl.⁴: G 01 G 19/02
G 01 G 21/23

(30) Priority: 03.05.84 GB 8411379

(43) Date of publication of application:
13.11.85 Bulletin 85/46

(84) Designated Contracting States:
AT BE CH DE FR GB IT LI LU NL SE

(71) Applicant: EGS SCALES (U.K.) LIMITED
19 Taxi Way Hillend Industrial Estate
Dalgety Bay Fife, KY11 5JW Scotland(GB)

(72) Inventor: Shering, Ernest Gunn c/o EGS SCALES (U.K.)
Ltd
19 Taxi Way Hillend Industrial Estate
Dalgety Bay Fife, KY11 5JW(GB)

(74) Representative: Huskisson, Frank Mackie et al,
FITZPATRICKS 4 West Regent Street
Glasgow G2 1RS Scotland(GB)

(54) Weighbridge.

(57) A weighbridge platform (10) is formed by a pair of longitudinal side beams (14) a plurality of transverse beams (15) and decking (13). At four locations, two at each end of the platform box shaped brackets (40) are provided between a pair of adjacent transverse beams (15). A prepared foundation (12) is provided at each end of the platform and two load cell assemblies are mounted on each foundation (12) to be surrounded by the brackets (40). Each load cell assembly has double ended shear beams (24) from which parallel suspension links (29) depend to engage two bollards (30) on the respective brackets (40).

Fig. 1

EP 0 161 103 A2

Croydon Printing Company Ltd.

WEIGHBRIDGE.

BACKGROUND OF THE INVENTION.

This invention relates to weighbridges.

Weighbridge technology normally involves supporting a platform on upstanding canister type compression cells located in mountings secured to a prepared foundation of length and width similar to the platform.  At least four cells are required; generally pairs of cells are spaced at longitudinal intervals of about 6 to 8 metres.  The platform requires to be restrained from undesired horizontal movement when a load is moving onto or leaving the platform, and in addition the cells require protection from platform movement both horizontally (dynamic loading) and vertically (shock loading). In one arrangement platforms are mounted on restraining posts which have first to be grouted into the foundation and bushes of tufnol or like hard wearing plastics material are provided to receive the posts.

The known technology therefore employs equipment or practices which are expensive or time consuming and add to the overall cost of the weighbridge.

In addition, known technology requires that the load cells be protected from damage; canister-type compression cells are particularly susceptible to side loadings and as a result preventative mountings for these load cells have been developed to protect them; all of which adds to the cost of the structure and ancillary components.

The restraining posts arrangement aforementioned has an additional disadvantage in that temperature changes which may be up to $50^{\circ}C$ can cause the steel platform structure to expand or contract about the fixed post with a resultant inaccuracy in the load cell performance and readings.

Shear beam load cells are also known from U.K. Patent 1 555 934, these are supported by columns at their ends and have a central depression from which hangs a link twisted through 90° and the link supports the platform which is thus suspended from the centre of each shear bean.   At least four such cells are positioned one adjacent to or below each corner of the platform.  A disadvantage of such load cell assemblies is that horizontal movement of the platform can still occur and restrainers have to be provided.   A further disadvantage is that the assembly is of such a height, about ¾ metre that it has to be located at the side of the platform unless the platform is mounted over a pit.

An object of this invention is to obviate or mitigate the aforementioned disadvantage.

## SUMMARY OF THE INVENTION.

According to the present invention there is provided a weighbridge comprising a platform supported by a plurality of shear beam load cell assemblies via suspension link means suspended from each assembly and engaging projections on the underside of the platform, characterised in that the shear beam of each load cell assembly has an elongate body supported centrally below the platform and carrying at its ends parallel suspension links the lower ends of which engage projections mounted on the underside of the platform.

## BRIEF DESCRIPTION OF THE DRAWINGS.

Fig. 1 is a sectional side elevation of one end of a weighbridge according to the invention;

Fig. 2 is a sectional end elevation on the line II-II of Fig. 1;

Fig. 3 is an end elevation to an enlarged scale of a detail of Fig. 2;

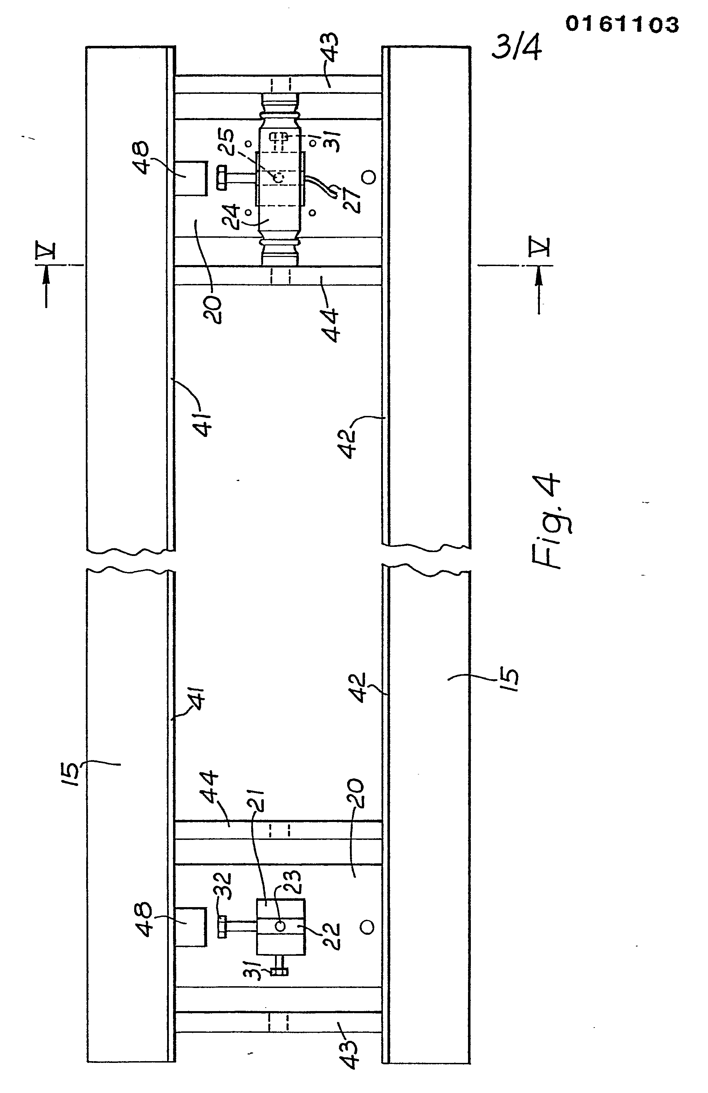

Fig. 4 is a plan view of a detail reduced scale; and

Fig. 5 is a sectional side elevation on the line V-V of Fig. 4.

DETAILED DESCRIPTION OF THE INVENTION.

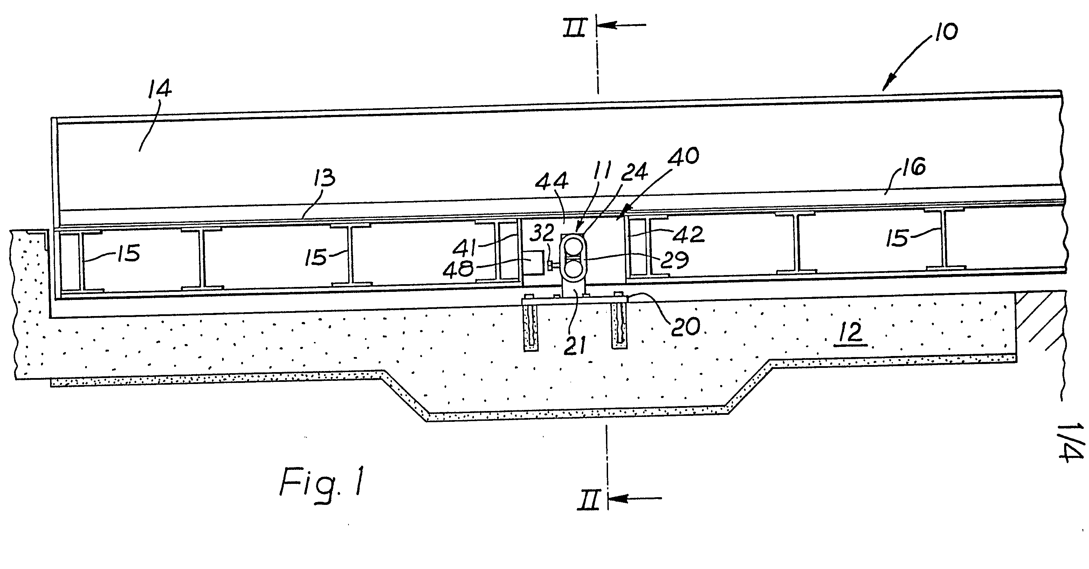

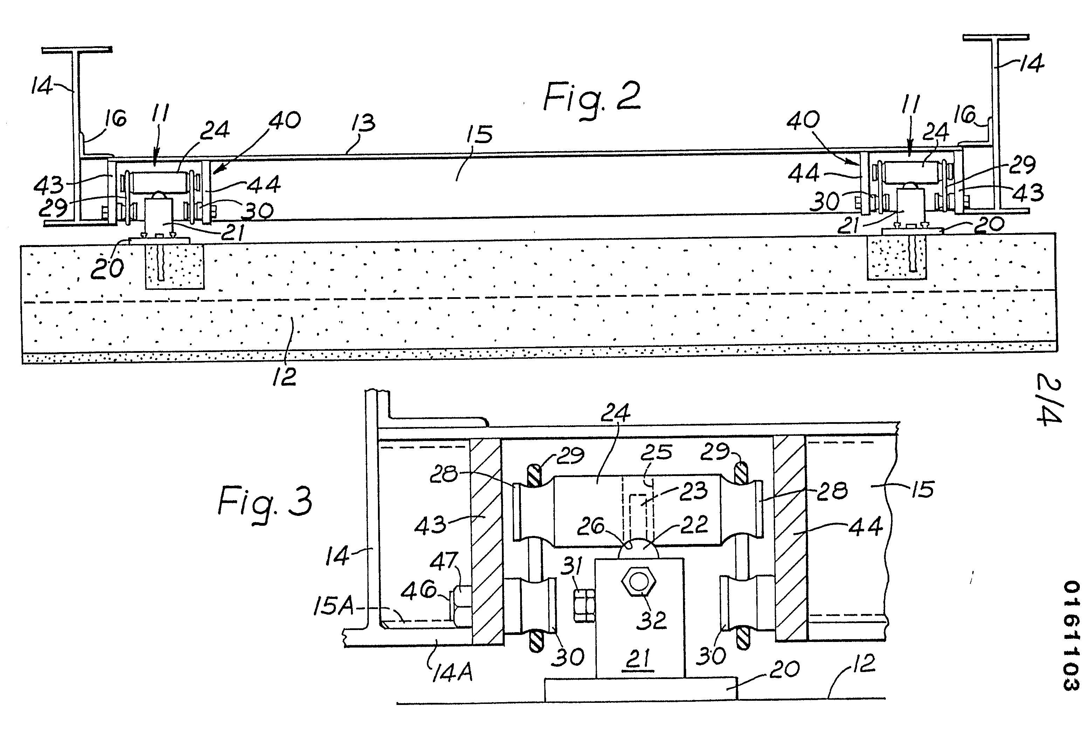

Referring to the drawings, the weighbridge comprises an elongate rectangular platform 10 suspended from four shear beam load cell assemblies 11 located below the platform adjacent to the sides thereof and spaced a relatively short distance from the ends of the platform, each load cell having a double ended shear beam and being fixedly mounted on a prepared foundation 12. The load cell assemblies can be disposed longitudinally, but it has been found that an even more efficient result is obtained by locating the load cell assemblies transversely as illustrated in Figs. 1 and 2.

The platform 10 comprises a deck 13 and an underframe formed by two main longitudinal side beams 14 of T section and series of transverse I beams (transverse) 15 between the side beams 14. The lower flanges 15A of the transverse I beams 15 are welded to the inner flanges 14A of the longitudinal side beams 14.

A box shaped bracket 40 is located below the deck between two transverse I beams 15 as more fully described hereinafter. The platform may have a length of up to 18 metres.

The longitudinal side beams 14 provide the main strength for the platform structure and extend above the height of the platform to additionally provide retaining walls along each side of the deck 13. The deck is supported on the upper flanges 15B of the transverse beams and a gap formed between the end of the transverse beams 15 and the spine of the longitudinal beam 14 is covered by a plate 16 of angle section bolted to the longitudinal beam 14. The angle plate is at a height such that the extreme edges of the decking locate below it and there is sufficient space between the decking and the angle plate to allow for drainage from the decking in wet weather.

The foundation 12 comprises two transverse strips of concrete, longitudinally spaced so that one will be located below each end of the platform.

Each load cell assembly 11 comprises a base plate 20 mounting a plinth 21 which has a semi-cylindrical protrusion 22 across its upper face and a pin 23 extending upwardly from the centre of the protrusion, and a double ended shear beam load cell 24 having a central aperture 25 to loosely receive the pin 23 and a semi-cylindrical depression 26 in its lower face to accommodate the protrusion 22 of the plinth 21 when, the shear beam 24 locates over the pin 23. The radius of the depression 26 in the beam 24 is slightly greater than that of the protrusion 22, on the plinth 21 and the diameter of the aperture 25 in the beam 24 is greater than that of the pin 23 so that the beam has a limited pivotal movement on its longitudinal axis, i.e. it can rock slightly on the plinth. The same effect may be obtained with a protrusion on the shear beam and depression in the plinth.

The shear beam 24 is made of hardened steel and has an elongate body which is square in cross section and rectangular in longitudinal section, said body having a hollow central portion which houses four strain gauges (not shown) hermetically sealed therein and an electrical connection 27 extends from one side of the beam, (the inner side) when the beam is transversely disposed in situ.

Each end 28 of the beam 24 is capstan-shaped and a metal looped link 29 depends from the recessed portion of each end. The lower end of each link engages a capstan-shaped bollard 30 which is mounted on the platform as hereinafter described to suspend the platform from these links. Thus the load cells 24 are double-ended, end-loaded centre-mounted shear beam cells, and only four are required for platforms up to 18 metres in length.

The plinth 21 has a buffer 31 extending from one face, to lie transverse and outwardly facing when the plinth is in situ, and also a buffer 32 extending longitudinally (outwardly) for the purpose hereinafter disclosed.    These buffers 31, 32 are length adjustable.

Because no additional cells or other support is necessary between the two pairs of cells at each end, no prepared foundation is required except at the ends with a consequent saving on materials, time and labour in preparing the foundations.

Four box-shaped brackets 40 are provided for use in conjunction with the four load cell assemblies.    Each bracket 40 is formed by vertical plating welded between a pair of transverse beams near to each end of the platform, namely transverse plating 41, 42 which extends the full length of the transverse beams to give added strength to the structure, and relatively thick longitudinal plates 43, 44 located inwardly of the longitudinal side beam between the plating 41, 42 and spaced apart to form an enclosed area of substantially square section in plan.    Co-axial holes are provided in the longitudinal walls 43, 44 to receive the capstan shaped bollards 30. These bollards have threaded shanks 46 onto which nuts 47 are located to secure the bollards on the bracket 40. The outer of these bollards can abut the buffer 31 in the plinth 21.

On one transverse wall, the one nearest the end of the platform, i.e. wall 41, a solid metal block 48 is mounted and it can abut the buffer 32 on the plinth. When the platform is positioned relative to the load cell the assemblies  11 lie in the space within the respective box bracket 40.

The procedure for erecting a weighbridge is as follows:

The foundation is prepared consisting only of two transverse strips 12 spaced apart so as to lie below the ends of the platform.

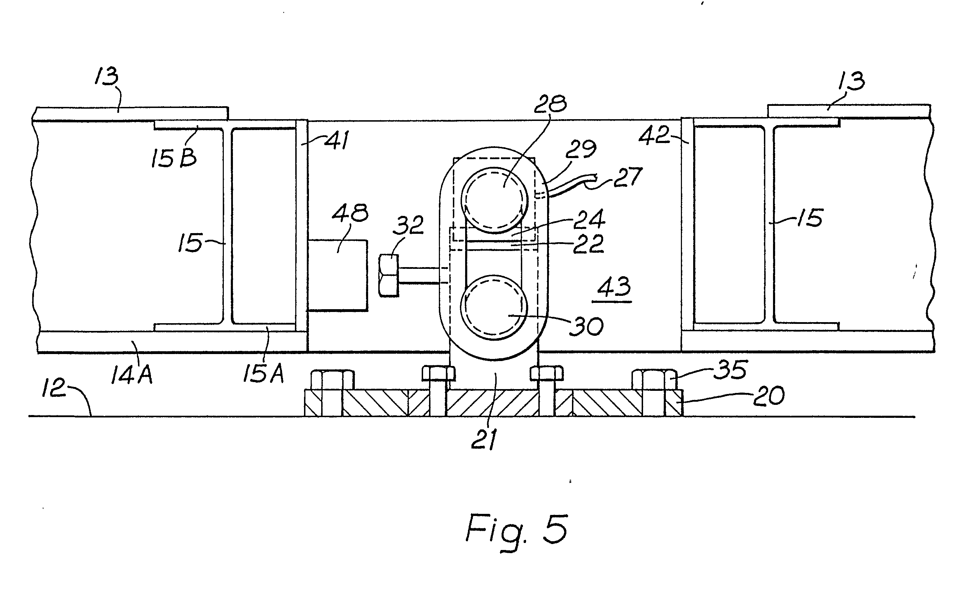

A load cell assembly 11 is mounted on each foundation strip and its base plate 20 bolted thereto by bolts 35 (Fig. 5).

The four brackets 40 are welded to the underside of the platform deck, and as can be seen from Figs. 1 and 2, these brackets 40 and consequently the load cell assemblies 11 are spaced a relatively short distance from the end of the platform and inwardly of the longitudinal beams 14.

The deck 13 is formed by a series of transverse plates and at least those over the brackets are removable for access to the load cells.

The platform 10 is lowered by a crane to overlie the load cells.

The buffer 31 on the plinth is in line with one of the bollards 30 of the platform underframe and is intended to reduce any small transverse movement of the platform to a minimum when a load is moving onto or leaving the deck. The longitudinal buffer 32 is adjacent to a plate and is intended to reduce any small longitudinal movement of the platform. These bollards are now length adjusted if necessary.

The platform is raised a short distance and the metal links 29 positioned on the ends of the shear beams 21 with their lower ends under the bollards 30. Finally the platform is lowered until the bollards 30 sit on the links 29 at which time the weight of the platform is borne by the load cells via their pairs of links.

In the embodiment hereinbefore described, the maximum height of the load cell assembly above the foundation 12 is 260 mm (10") and the height of the platform is less than 300 mm, i.e. under 12".

The plinth 21 on its base 20 extends to a height of 155 mm and the protrusion 22 has a 10 mm radius. The load cell double ended shear beam is 76 mm high and the links are 198 mm in length and 24 mm thick, giving an inside length of 150 mm.

Thus, a great advantage of a weighbridge having load cell assemblies as hereinbefore described is that the assemblies are small enough in height to be located below the platform even when surface mounted, as opposed to pit-mounted.

A weighbridge as hereinbefore described is a radical development of all known types of weighbridge structures, eliminating the need for restrainers, anchors, struts, posts, flextures, ball protections and means for protecting the load cells. This is due to the two parallel links on each load cell supporting the platform below the level of the centre of gravity of the load cell assemblies, thus virtually eliminating the destructive forces, i.e. shock loading and dynamic loading which can affect known load cells.

Other advantages over known structures are:

1. The use of two links to support the platform on each shear beam causes the strain on the beam to move outwards rather than towards the centre as in the known centre-link shear beam, thus dissipating the strain and providing more accurate readings from the strain gauges.

2. The disposition of the pairs of links, the double ended shear beams and the bollards reduces movement of the platform to such an extent that the usual restrainers, flextures, anchors etc. bolted to the platform and the foundations are not required. The buffers on the plinths provide all the resistance likely to be necessary.

3. The overall cost of building the weighbridge is reduced because:

a) two foundation pads are required only at each end

    b) only four load cell assemblies are required to a maximum of 20 metres and they do not need means to protect them against movement of the platform.

    c) none of the normal restrainers or protections are required.

4.  The limited freedom of movement of the double ended shear beam on the plinth gives an equal load distribution on both sides of the load cell and provides for high repeatability of readings.

5.  The hermetically sealed shear beams do not require external coverings as was required previously for waterproof purposes.

CLAIMS.

1.    A weighbridge comprising a platform (10) supported by a plurality of shear beam load cell assemblies (11) via suspension link means (29) suspended from each assembly (11) and engaging projections (30) on the underside of the platform, characterised in that the shear beam (24) of each load cell assembly has an elongate body supported centrally below the platform (10) and carrying at its ends parallel suspension links (29) the lower ends of which engage projections (30) on the underside of the platform (10).

2.    A weighbridge according to claim 1 characterised in that the under-frame is formed of a pair of longitudinal side beams and a plurality of longitudinally spaced transverse beams welded thereto.

3.    A weighbridge according to claim 1, characterised in that the projections (30) on the underside-of the platform (10) are mounted on a bracket means (40) secured between adjacent transverse beams forming part of the under-frame to overlie and enclose a load cell assembly.

4.    A weighbridge according to any one of claims 1 to 3 characterised in that a prepared  transverse foundation strip is provided below the platform adjacent to each end thereof and two load cell assemblies  are mounted on each foundation strip.

5.    A weighbridge according to any one of claims 1 to 4, characterised  in that each load cell assembly comprises a plinth (21) on the upper end of which is a double ended shear beam mounted with limited pivotal movement thereon.

6.    A weighbridge according to claim 5, characterised in that the plinth (21) has a semi-cylindrical protrusion (22) from which projects an upstanding pin, and the underside of the double ended shear beam has a depression (26) to overlie the protrusion and an aperture (25) to receive the pin (23), whereby the shear beam has limited pivotal movement on its longitudinal axis.

7.    A weighbridge according to claim  6, characterised in that the depression (26) on the underside of the shear beam has a radius which is slightly greater than the radius of the protrusions (22) on the plinth (21) and the aperture (25) in the shear beam (24) has a diameter which is slightly greater than that of the upstanding pin.

8.    A weighbridge according to any one of claims 3 to 7, characterised in that each bracket means (40) is located inwardly of the adjacent longitudinal side beam (14).

9.    A weighbridge according to claim 8, characterised in that the bracket means (40) are supported on the inner extremity of the adjacent longitudinal side beam (14) in addition to being secured to adjacent transverse beams (15).

II

10

14

13                                    44  11  24  40

16

15        15        15        41  32          42        15

48        29

21        20        12

Fig. 1

II

1/4

0161103

Fig. 2

Fig. 3

Fig.4

0161103

Fig. 5

0161103